# EUROPÄISCHE PATENTSCHRIFT

(11) **EP 3 812 622 B1**
(45) Veröffentlichungstag und Bekanntmachung des Hinweises auf die Patenterteilung: **18.01.2023**
(21) Anmeldenummer: 20198060.4
(22) Anmeldetag: 24.09.2020
(51) Int. Cl.: F16H 37/08

(54) **GETRIEBE**
TRANSMISSION
BOÎTE DE VITESSES

(30) Priorität: 23.10.2019 DE 102019216303
(43) Veröffentlichungstag der Anmeldung: 28.04.2021
(73) Patentinhaber: Deere & Company, Moline, IL 61265 (US)
(72) Erfinder: Raisch, Stefan, 68163 Mannheim (DE)
(74) Vertreter: Dehnhardt, Florian Christopher

(56) Entgegenhaltungen:
- EP-A2- 0 424 054
- DE-A1- 10 021 912
- DE-A1-102015 211 809

## Beschreibung

Die Erfindung betrifft ein Getriebe mit zumindest einer ersten und einer zweiten Welle, wobei zumindest eine Schaltgruppe zwischen der ersten und der zweiten Welle angeordnet ist, wobei die zumindest eine

Schaltgruppe zumindest zwei einzelne schaltbare Übertragungseinheiten aufweist, die sich hinsichtlich ihres Übersetzungsverhältnisses voneinander unterscheiden, und wobei eine Planetenstufe zwischen der ersten Schaltgruppegruppe und der ersten Welle angeordnet ist, wobei die Planetenstufe derart ausgebildet ist, dass eine über die erste Welle eingebrachte mechanische Leistung über einen ersten und/oder einen zweiten zu- oder abkoppelbaren Leistungspfad auf die zweite Welle übertragbar ist, wobei jedem Leistungspfad zumindest eine Übertragungseinheit der zumindest einen Schaltgruppe zugeordnet ist und wobei in zumindest einem Schaltzustand der zumindest einen Schaltgruppe der Leistungsfluss über zumindest jeweils eine Übertragungseinheit des ersten und des zweiten Leistungspfades verläuft.

In größeren und schweren Nutzfahrzeugen, wie beispielsweise Traktoren, ist es entscheidend, dass die dort eingesetzten Getriebe derart ausgelegt sind, dass eine große Spreizung bei gleichzeitig geringer zu synchronisierender Massenträgheit gewährleistet ist. Eine hohe Spreizung bedingt, dass unteren Gänge eine hohe Übersetzung haben müssen. Außerdem steht die Forderung nach einer geringen zu synchronisieren Massenträgheit in konstruktiver Hinsicht in einem Spannungsverhältnis zu möglichst geringen Drehzahlen der rotierenden Komponenten des Getriebes. Aus diesem Grunde ist es stets ein Bestreben, die Anzahl der Gänge zu erhöhen, um die Übergänge hinsichtlich des Übersetzungsverhältnisses zwischen den einzelnen Gängen möglichst fließend innerhalb der Getriebeeinheit ausbilden zu können. Darüber hinaus sollen die Gänge auch möglichst unter Last schaltbar sein.

Aus dem Stand der Technik ist es bereits bekannt, Planetenstufen dazu einzusetzen, um die mechanische Leistung über zwei separate Leistungspfade von einer Eingangswelle auf eine Ausgangswelle zu übertragen. Durch die gleichzeitige Zukopplung von zwei Leistungspfaden, die darüber hinaus eine Leistungsübertragung in einem unterschiedlichen Übersetzungsverhältnis ermöglichen, kann eine nahezu lückenlose Durchschaltung der Getriebespreizung ermöglicht werden.

Eine derartige Anordnung zeigt beispielsweise die DE 10 2015 211 809 A1. Durch eine zusätzliche Leistungsverzweigung innerhalb der Planetenstufe kann insbesondere eine Erhöhung der Gangzahl erreicht werden, ohne dass zusätzliche Übertragungseinheiten innerhalb der nachgeordneten Schaltgruppe notwendig sind.

Ausgehend von dem genannten Stand der Technik liegt der vorliegenden Erfindung die Aufgabe zugrunde, die Gangzahl innerhalb der Getriebespreizung zu erhöhen, ohne dass hierfür eine wesentliche Bauraumvergrößerung erforderlich ist. Darüber hinaus sollen die einzelnen Gänge auch möglichst unter Last schaltbar sein.

Diese Aufgabe wird gelöst durch ein Getriebe gemäß Anspruch 1. Erfindungsgemäß verfügt die Planetenstufe über zumindest drei Planeteneinheiten, wobei jede Planeteneinheit aus zumindest einem Sonnenrad und jeweils einem das Sonnenrad umlaufenden Planetenträger besteht, wobei die Planeteneinheit ausschließlich über die Planetenträger miteinander verbunden sind und wobei eine erste und eine zweite Planeteneinheit über das jeweilige Sonnenrad mit der ersten Welle zu- oder abkoppelbar ausgebildet sind und wobei die dritte Planeteneinheit den Leistungsausgang für den ersten und den zweiten Leistungspfad bereitstellt.

Jede Planeteneinheit verfügt somit zumindest über ein Sonnenrad und einen Planetenträger, wobei jeweils eine Vielzahl von Planetenrädern gemäß einer üblichen Ausgestaltung in ihrem Drehpunkt über den Planetenträger miteinander verbunden sind. Hierbei können die Planetenräder je nach Schaltzustand das jeweilige Sonnenrad umlaufen, wobei jedes Planetenrad eine Rotationsgeschwindigkeit aufweist, die sich von der Rotationsgeschwindigkeit des Planetenträgers unterscheiden kann. Maßgeblich sind hierfür die Durchmesserunterschiede zwischen den Planetenrädern und dem Sonnenrad, wobei alle Planetenräder einer Planeteneinheit identisch ausgebildet sind.

Durch die erfindungsgemäße Ausgestaltung ist es möglich, dass mechanische Leistung über zwei unterschiedliche Planeteneinheiten von der ersten Welle auf den ersten und/oder den zweiten Leistungspfad übertragen werden kann. Bevorzugt sind hierbei die erste und die zweite Planeteneinheit so ausgebildet, dass sie sich hinsichtlich ihres Übersetzungsverhältnisses voneinander unterscheiden. Als Übersetzungsverhältnis wird im Rahmen der Erfindung für die jeweilige Planeteneinheit das Verhältnis aus dem Durchmesser der Planetenräder und dem Durchmesser des von den Planetenrädern umlaufenden Sonnenrades bezeichnet. Somit können unterschiedliche Schaltzustände realisiert werden, je nachdem über welche Planeteneinheit eine Übertragung der mechanischen Leistung auf den Leistungsausgang der Planetenstufe erfolgt.

Um die erste und/oder die zweite Planeteneinheit mit der ersten Welle in Wirkverbindung zu bringen, sind bevorzugt für die erste und die zweite Planeteneinheit jeweils eine Planetenkopplung vorgesehen, die unabhängig voneinander zu- oder abgekoppelt werden können, wobei ein zugekoppelter Zustand einen Zustand beschreibt, bei dem eine Leistungsübertragung erfolgen kann. Entsprechend kann in einem abgekoppelten Zustand keine Leistung übertragen werden.

In einer bevorzugten Weiterbildung der Erfindung bildet das Sonnenrad der dritten Planeteneinheit den Leistungsausgang für den ersten Leistungspfad und der Planetenträger der dritten Planeteneinheit den Leistungsausgang für den zweiten Leistungspfad. Hierbei macht sich die Erfindung den Umstand zunutze, dass innerhalb einer Planeteneinheit zwei sich umlaufende Räder unterschiedliche Drehzahlen aufweisen können, solange keine mittelbare oder unmittelbare Kopplung erfolgt. Dementsprechend können bei einer Ausgestaltung mit Sonnenrad und Planetenträger beide Komponenten frei voneinander rotieren. Dies ist allerdings nur dann möglich, wenn zumindest der Planetenträger in Rotation versetzt wird. Erfindungsgemäß ist vorgesehen, dass die einzelnen Planeteneinheiten über den jeweiligen Planetenträger miteinander verbunden sind, sodass die Planetenträger aller Planeteneinheiten stets die gleiche Rotationsgeschwindigkeit aufweisen. Der Leistungseingang erfolgt allerdings stets über die Sonnenräder der Planeteneinheiten, sodass bei nur einer zugekoppelten Planeteneinheit lediglich das Sonnenrad nicht aber der dem Sonnenrad zugeordnete Planetenträger in Rotation versetzt wird, wobei eine etwaige Massenträgheit oder Reibungskräfte außer Acht gelassen werden. Damit auch der Planetenträger in Rotation versetzt werden kann, müssen entweder beide Leistungseingänge oder beide Leistungsausgaben mittelbar oder unmittelbar miteinander gekoppelt werden.

Gemäß einer ersten Schaltvariante können hierzu beide Planetenkupplungen der ersten und der zweiten Planeteneinheit gekoppelt werden, sodass beide Sonnenräder die gleiche Rotationsgeschwindigkeit aufweisen. Sofern beide Planeteneinheiten mit einem unterschiedlichen Übersetzungsverhältnis ausgebildet sind, führt dies gleichzeitig dazu, dass auch der Planetenträger die gleiche Rotationsgeschwindigkeit aufweist, da - wie bereits erläutert - die Planetenträger aller Planeteneinheiten miteinander verbunden sind. Demnach weist auch der Planetenträger der dritten Planeteneinheit am Leistungsausgang für den zweiten Leistungspfad die gleiche Rotationsgeschwindigkeit auf wie die erste Welle. Die Rotationsgeschwindigkeit des Sonnenrades hängt im Gegensatz dazu im Wesentlichen davon ab, wie die einzelnen Leistungspfade hinter dem ersten und dem zweiten Leistung Ausgang miteinander in Verbindung stehen.

Gemäß einem zweiten Schaltzustand können beide Leistungsausgänge an der dritten Planeteneinheit unmittelbar oder mittelbar miteinander gekoppelt werden, wo bei dann allerdings nur eine der beiden Planetenkupplungen der ersten oder der zweiten Planeteneinheit gekoppelt werden können, um das Getriebe nicht zu blockieren. Die Koppelung der beiden Leistungsausgänge erfolgt jeweils durch Zukoppeln jeweils einer Übertragungseinheit im ersten Leistungspfad und einer Übertragungseinheit im zweiten Leistungspfad. Sofern beide Planetenkupplungen zugekoppelt sind, kann lediglich eine Übertragungseinheit entweder im ersten oder im zweiten Leistungspfad zugekoppelt werden.

In einer bevorzugten Ausgestaltung der Erfindung sind die Übertragungseinheiten des ersten und des zweiten Leistungspfades jeweils auf einem ersten und einem zweiten Außenwellenabschnitt angeordnet, die die erste Welle koaxial umgeben und nicht unmittelbar miteinander in Verbindung stehen. Dementsprechend sind die Übertragungseinheiten des ersten Leistungspfades auf einem ersten Außenwellenabschnitt und die Übertragungseinheiten des zweiten Leistungspfades auf einem zweiten Außenwellenabschnitt angeordnet. Derartige Außenwellenabschnitte haben den Vorteil, dass sie einerseits unverbunden gegenüber der ersten Welle ausgebildet werden können, sodass eine relative Rotation zwischen den einzelnen Außenwellenabschnitten und der ersten Welle möglich ist. Andererseits kann durch derartige Außenwellenabschnitte auch eine platzsparende Konstruktion geschaffen werden, da eine koaxiale Anordnung sehr viel weniger Bauraum benötigt als beispielsweise eine Anordnung nebeneinander.

Durch das unterschiedliche Übersetzungsverhältnis der Übertragungseinheiten im ersten und im zweiten Leistungspfad führt eine gleichzeitige Zukopplung dazu, dass zwar eine Leistungsübertragung auf die zweite Welle erfolgt, innerhalb der zweiten Welle aber keine unterschiedlichen Rotationsgeschwindigkeiten realisierbar sind. Demnach ist eine gleichzeitige Schaltung nur dann möglich, wenn keine unmittelbare oder mittelbare Kopplung zwischen den beiden Leistungsausgängen erfolgt, da eine solche Kopplung zwingend eine gleiche Rotationsgeschwindigkeit für beide Außenwellenabschnitte zur Folge hätte. Auch hieraus wird deutlich, dass eine gleichzeitige Schaltung beider Leistungspfade nur dann möglich ist, wenn lediglich eine der Planeteneinheit zugekoppelt ist.

Die Außenwellenabschnitte können ferner so ausgebildet sein, dass einer der Außenwellenabschnitte unmittelbar die erste Welle umschließt und der jeweils andere Außenwellenabschnitt sowohl die erste Welle als auch den anderen Außenwellenabschnitt umschließt. Natürlich können auch beide Außenwellenabschnitte unabhängig voneinander nebeneinander auf der ersten Welle angeordnet sein.

Gemäß einer Weiterbildung der Erfindung sind die Planetenkupplungen als Lamellenkupplung mit jeweils einem Lamelleninnenträger und einem Lamellenaußenträger ausgebildet, wobei die Lamellenaußenträger mit den Sonnenrädern der ersten und zweiten Planetenstufe und im einem zugekoppelten Zustand die Lamelleninnenträger mit der ersten Welle verbunden sind. Auch ist bevorzugt jeder Übertragungseinheit der zumindest einen Schaltgruppe jeweils eine Kupplung zugeordnet, die ebenfalls bevorzugt als Lamellenkupplung ausgebildet sind und über die die Übertragungseinheiten zu- oder abgekoppelt werden können.

Bevorzugt sind die Übertragungseinheiten zumindest teilweise als Zahnradpaare und/oder als Direktkupplung ausgebildet. Bei einem Zahnradpaar können unterschiedliche Übersetzungsverhältnisse realisiert werden, wobei sich das Übersetzungsverhältnis eines solchen Zahnradpaares aus dem Durchmesserunterschied der einzelnen Zahnräder zueinander ergibt. Im Rahmen der Erfindung werden die Zahnräder dieser Zahnradpaare auch als Antriebszahnrad und als Abtriebseinheiten bezeichnet, wobei ein Drehmoment von dem Antriebszahnrad auf das Abtriebseinheiten übertragen wird. Bei einer Direktkupplung werden die beiden Wellen unmittelbar miteinander gekoppelt, sodass folglich das Übersetzungsverhältnis einen Wert von i = 1 annimmt, wobei der Wert i für das Übersetzungsverhältnis steht und sich aus dem Verhältnis der Drehzahl der Antriebswelle zu der Drehzahl der Abtriebswelle ergibt. Ein Übersetzungsverhältnis von i = 1 kann selbstverständlich auch mit einem Zahnradpaar realisiert werden, wobei dann das Antriebs- und das Abtriebszahnrad den gleichen Durchmesser aufweisen.

In einer bevorzugten Weiterbildung sind zumindest zwei Übertragungseinheiten in jedem Leistungspfad angeordnet, sodass entsprechend über vier Übertragungseinheiten eine mechanische Leistung von der ersten Welle auf die zweite Welle übertragen werden kann. Zugleich ergeben sich Schaltungskombinationen, bei denen jeweils eine der Übertragungseinheiten aus dem ersten Leistungspfad und eine der Übertragungseinheiten aus dem zweiten Leistungspfad gleichzeitig gekoppelt werden, sodass sich eine gewisse Anzahl von Zwischengängen realisieren lässt. Die Anzahl der Zwischengänge kann dadurch erhöht werden, dass anstelle von nur zwei Übertragungseinheiten mehr Übertragungseinheiten im jedem Leistungspfad vorgesehen werden, z.B. zwei, drei, vier oder mehr Übertragungseinheiten.

Darüber hinaus kann der Schaltgruppe auch eine zweite Schaltgruppe nachgeordnet sein, wobei auch die zweite Schaltgruppe zumindest zwei Übertragungseinheiten aufweist, die analog zu den Übertragungseinheiten der ersten Schaltgruppe ausgebildet sein können und die sich hinsichtlich ihres Übersetzungsverhältnisses voneinander unterscheiden. Bei zwei Übertragungseinheiten in der zweiten Schaltgruppe kann zumindest eine Verdoppelung der Gangzahl erreicht werden.

Gemäß einer bevorzugten Ausgestaltung ist zudem eine koppelbare Reversiereinheit vorgesehen, die in einem zugekoppelten Zustand eine Umkehr der Drehrichtung einer Ausgangswelle bewirkt. Diese Ausgangswelle kann beispielsweise die zweite Welle sein, wobei aber insbesondere bei der Einbindung einer zweiten Schaltgruppe auch weitere Wellen vorgesehen sein können, wobei dann eine der zusätzlichen Wellen die Ausgangswelle des Getriebes darstellt. Letztendlich wird durch die Reversiereinheit erreicht, dass alle der Reversiereinheit nachgeschalteten Wellen im zugekoppelten Zustand der Reversiereinheit eine Umkehr der Drehrichtung erfahren. Eine solche Umkehr wird üblicherweise durch eine Kombination aus drei Zahnrädern bewirkt.

Gemäß einer Weiterbildung der Erfindung sind einzelne Gänge der zumindest einen Schalteinheit als Windungsgänge ausgebildet, wobei bei einem solchen Windungssgang die Abtriebseinheiten z.B. die Antriebszahnräder jeweils einer Übertragungseinheiten im ersten Leistungspfad und einer Übertragungseinheiten zweiten Leistungspfad auf einem gemeinsamen Außenwellenabschnitt angeordnet sind, der die zweite Welle koaxial umschließt.

Gegenstand der Erfindung ist auch die Verwendung eines erfindungsgemäßen Getriebes in einer Landmaschine, insbesondere einem Traktor gemäß Patentanspruch 12 sowie ein Verfahren zum Betrieb des erfindungsgemäßen Getriebes gemäß Anspruch 13.

Gemäß dem erfindungsgemäßen Verfahren werden die Schaltzustände zumindest einen Schaltgruppe derart durchlaufen, dass abwechselnd entweder nur eine der Übertragungseinheiten des ersten Leistungspfades oder jeweils eine der Übertragungseinheiten sowohl im ersten als auch zumindest im zweiten Leistungspfad zugekoppelt sind.

Gemäß einer Weiterbildung der Erfindung ist bei einer gemeinsamen Schaltung des ersten und des zweiten Leistungspfades nur eine der Planetenkupplungen zugekoppelt. Alternativ sind bei einer Schaltung von nur einem der beiden Leistungspfade beide Planetenkupplungen vorzugsweise zugekoppelt.

Im Folgenden wird wir die Erfindung anhand eines Ausführungsbeispiels näher erläutert. Es zeigen:
Fig. 1 eine Landmaschine mit einem Antriebsstrang, der das erfindungsgemäße Getriebe umfasst,
Fig. 2 ein erfindungsgemäßes Getriebe in einer Prinzipskizze,
Fig. 3 eine Schaltmatrix für den Vorwärtsbetrieb des erfindungsgemäßen Getriebes gemäß der Fig. 2.

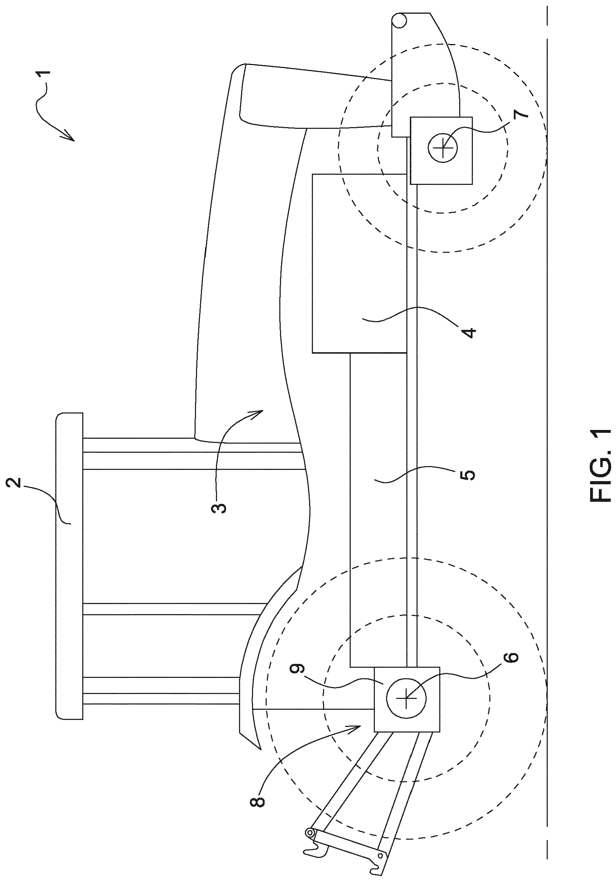

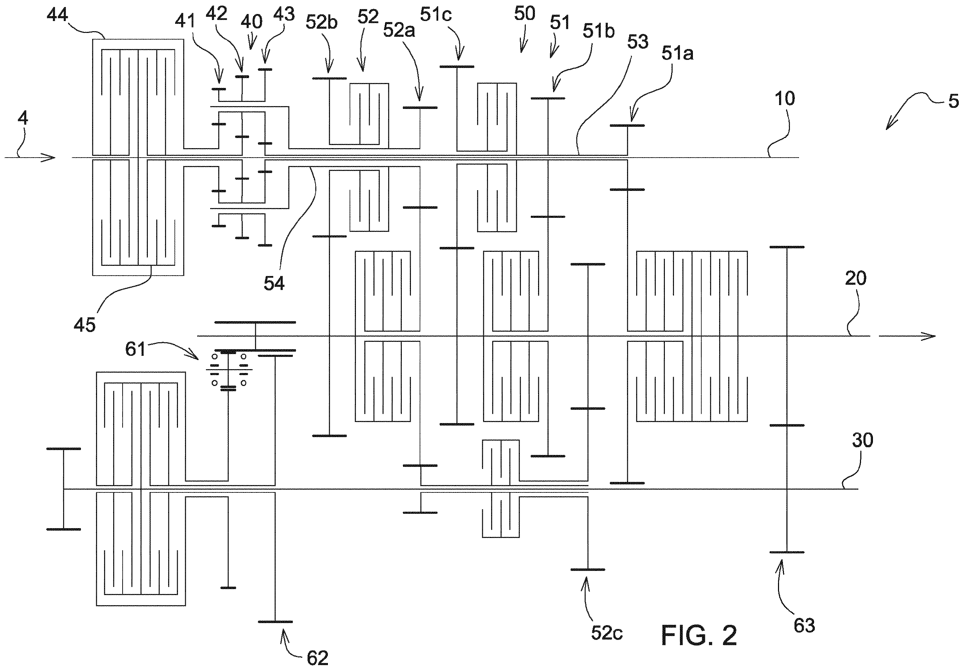

Die Fig. 1 zeigt eine Landmaschine 1 in Gestalt eines Traktors mit einer Kabine 2 und einem Antriebsstrang 3, wobei der Antriebsstrang 3 einen Antriebsmotors 4 und ein Getriebe 5 umfasst. Der Antriebsmotor 4 ist als Verbrennungskraftmaschine ausgeführt. Ferner ist ein Fahrantrieb 8 vorgesehen, der Achsgetriebe 9 und eine permanent angetriebene hintere Fahrzeugachse 6 aufweist. Zusätzlich umfasste der Fahrantrieb 8 eine bedarfsweise angetriebene vordere Fahrzeugachse 8. Das erfindungsgemäße Getriebe 5 ist in der Figur 2 dargestellt.

Das Getriebe 5 weist eine erste und eine zweite Welle 10,20 auf, wobei eine Schaltgruppe 50 zwischen der ersten Welle 10 und der zweiten Welle 20 angeordnet ist. Die Schaltgruppe verfügt über sechs einzeln zuschaltbare Übertragungseinheiten 51a, 51b, 51c, 52a, 52b, 52c, die sich hinsichtlich ihres Übersetzungsverhältnisses voneinander unterscheiden. Jedem der einzelnen Übertragungseinheiten 51a, 51b, 51c, 52a, 52b, 52c ist eine eigene Lamellenkupplung zugeordnet, sodass sie einzelnen zu- oder abgekoppelt werden können. Die Übertragungseinheiten 51a, 51b, 51c, 52a, 52b, 52c sind darüber hinaus als Zahnradpaare ausgebildet, wobei über Antriebszahnräder eine mechanische Leistung von der ersten Welle 10 auf die zweite Welle 20 übertragen wird. Aus diesem Grunde sind die Antriebszahnräder auf die ersten Welle 10 und die Antriebszahnräder auf der zweiten Welle 20 angeordnet. Eine Besonderheit stellt in diesem Zusammenhang die Übertragungseinheiten 52c dar, da hierbei zunächst durch Zwischenschaltung der Übertragungseinheit 52a ein Drehmoment auf eine dritte Welle 30 übertragen wird und erst von dort eine Rückübertragung auf die zweite Welle 20 erfolgt.

Die einzelnen Übertragungseinheiten 51a, 51b, 51c, 52a, 52b, 52c sind jedoch nicht unmittelbar auf der ersten Welle 10 sondern vielmehr auf Außenwellenabschnitten 53,54 angeordnet, wobei die Außenwellenabschnitte 53,54 die erste Welle 10 koaxial umgeben und somit rotiertbar zueinander und auch zur ersten Welle 10 ausgebildet sind. Hierbei sind die Übertragungseinheiten 51a, 51b, 51c auf einem ersten Außenwellenabschnitt 53 und die Übertragungseinheiten 52a, 52b, 52c auf dem zweiten Außenwellenabschnitt 54 angeordnet. Somit bilden sich über die Außenwellenabschnitte 53,54 zwei unabhängige Übertragungsgruppen heraus, die jeweils einem ersten und einem zweiten Leistungspfad zugeordnet sind. Diese beiden Leistungspfade werden über eine Planetenstufe 40 betrieben, wobei auch diese Planetenstufe 40 auf der ersten Welle 10 angeordnet ist. Die Besonderheit dieser Planetenstufe vierzig besteht darin, dass diese über drei Planeteneinheiten einundvierzig, 42,43 besteht wobei die erste und die zweite Planeteneinheit 41,42 als Leistungseingang und die dritte Planeteneinheit 43 als Leistungsausgang dient. Jede Planeteneinheit 41, 42,43 besteht jeweils aus einem Sonnenrad und einen das Sonnenrad umlaufenden Planetenträger mit einer Vielzahl von Planetenrädern. Die Planetenträger der Planeteneinheiten 41, 42,43 sind miteinander verbunden und stehen darüber hinaus in Verbindung mit dem zweiten Außenwellenabschnitt 54 und damit mit den Übertragungseinheiten 52a, 52b, 52c. Das Sonnenrad der dritten Planeteneinheit 43 ist hingegen mit dem ersten Außenwellenabschnitt 53 und damit mit den Übertragungseinheiten 51a, 51b, 51c verbunden.

Der Leistungseingang erfolgt über die Sonnenräder der ersten und der zweiten Planeteneinheit 41, 42, wobei der ersten Planeteneinheit 41 eine Planetenkupplung 44 und der zweiten Planeteneinheit 42 eine Planetenkupplung 45 zugeordnet sind und wobei die Planetenkupplungen 44, 45 als Lamellenkupplung ausgebildet sind, über die die Sonnenräder der Planeteneinheit 41, 42 mit der ersten Welle 10 gekoppelt werden können.

Sofern beide Planetenkupplungen 44, 45 betätigt werden weisen die Sonnenräder der ersten und der zweiten Planetenstufe 41, 42 die gleiche Rotationsgeschwindigkeit auf, wobei sich die Sonnenräder hinsichtlich ihres Durchmessers voneinander unterscheiden. Dadurch dass die Planetenträger miteinander verbunden sind, hat dies zur Folge, dass sowohl die Planetenträger als auch die Sonnenräder der ersten und der zweiten Planeteneinheit 41, 42 die gleiche Rotationsgeschwindigkeit aufweisen, wobei diese Rotationsgeschwindigkeit auch der des Planetenträgers der dritten Planeteneinheit 43 entspricht. Bei einer solchen gleichzeitigen Schaltung der Planetenkupplungen 44, 45 kann entweder eine der Übertragungseinheiten 51a, 51b, 51c des ersten Leistungspfades oder eine der Übertragungseinheiten 52a, 52b, 52c des zweiten Leistungspfades zugekoppelt werden, sodass die mechanische Leistung auf zweite Welle 20 nur über einen Leistungspfad möglich ist.

Allerdings besteht auch die Möglichkeit Leistung auf beide Leistungspfade zu verteilen, wobei dann lediglich eine der Planetenkupplungen 44,45 geschaltet wird und dann jeweils eine der Übertragungseinheiten 51a, 51b, 51c aus dem ersten Leistungspfad und eine der Übertragungseinheiten 52a, 52b, 52c aus dem zweiten Leistungspfad zugekoppelt werden.

Somit ergibt sich trotz einer relativ geringen Anzahl von Übertragungseinheiten 51a, 51b, 51c, 52a, 52b, 52c eine Vielzahl möglicher Schaltkombinationen und damit auch eine Vielzahl von Gängen zur Überwindung der Getriebespreizung. Eine zusätzliche Erhöhung wird durch eine zweite Schaltgruppe bestehend aus den Übertragungseinheiten 62,63 erreicht. Darüber hinaus ist auch eine Reversiereinheit 61 vorgesehen, über die die Drehrichtung der zweiten Welle 20 umgekehrt werden kann.

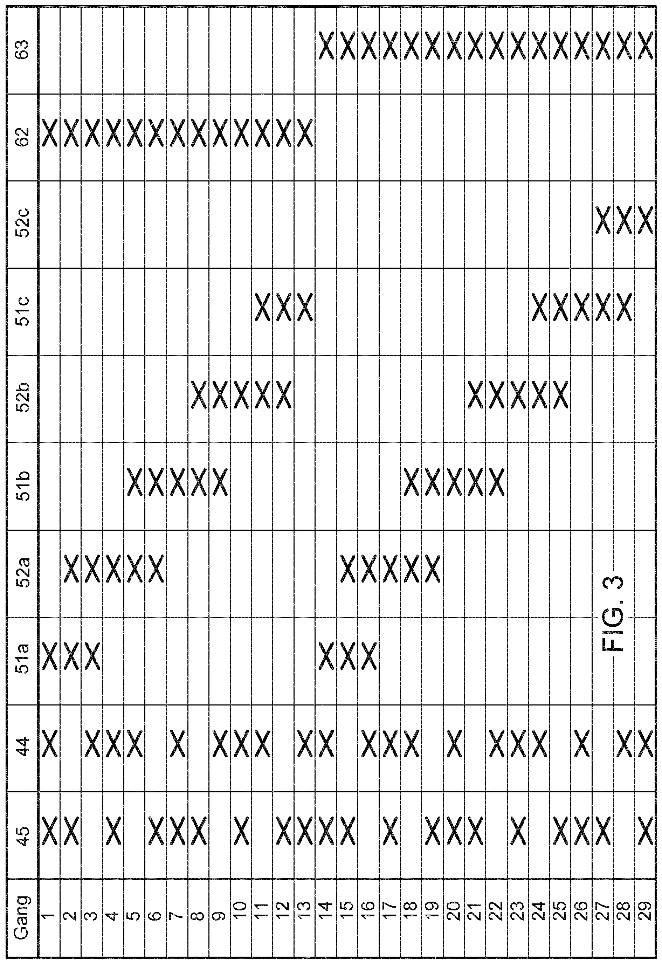

Die Fig. 3 zeigt eine Schaltmatrix für das erfindungsgemäße Getriebe 5. Hierbei ist deutlich zu erkennen, dass bei einer gleichzeitigen Schaltung von jeweils einer der Übertragungseinheiten 51a, 51b, 51c aus dem ersten Leistungspfad und einer der Übertragungseinheiten 52a, 52b, 52c aus dem zweiten Leistungspfad lediglich eine der Planetenkupplungen 44, 45 geschlossen sein kann.

## Patentansprüche

1. Getriebe (5) mit zumindest einer ersten und einer zweiten Welle (10, 20),
wobei zumindest eine Schaltgruppe (50) zwischen der ersten und der zweiten Welle (10, 20) angeordnet ist,
wobei die zumindest eine Schaltgruppe (50) zumindest zwei einzeln schaltbare Übertragungseinheiten (51a, 51b, 51c, 52a, 52b, 52c) aufweist, die sich hinsichtlich ihres Übersetzungsverhältnisses voneinander unterscheiden, und
wobei eine Planetenstufe (40) zwischen der zumindest einen Schaltgruppe (50) und der ersten Welle (10) angeordnet ist,
wobei die Planetenstufe (40) derart ausgebildet ist, dass eine über die erste Welle (10) eingebrachte mechanische Leistung über einen ersten und/oder einen zweiten zu- oder abkoppelbaren Leistungspfad auf die zweite Welle (20) übertragbar ist,
wobei jedem Leistungspfad zumindest eine Übertragungseinheit (51a, 51b, 51c, 52a, 52b, 52c) der zumindest einen Schaltgruppe (50) zugeordnet ist, und
wobei in zumindest einem Schaltzustand der zumindest einen Schaltgruppe (50) der Leistungsfluss über zumindest jeweils eine Übertragungseinheit (51a, 51b, 51c, 52a, 52b, 52c) des ersten und zweiten zu- oder abkoppelbaren Leistungspfades verläuft,
**dadurch gekennzeichnet, dass** die Planetenstufe (40) über zumindest drei Planeteneinheiten (41, 42, 43) verfügt,
wobei jede Planeteneinheit (41, 42, 43) aus zumindest einem Sonnenrad und jeweils einen das Sonnenrad umlaufenden Planetenträger besteht,
wobei die Planeteneinheiten (41, 42, 43) ausschließlich über die Planetenträger miteinander verbunden sind, und
wobei eine erste und eine zweite Planeteneinheit (41, 42) über das jeweilige Sonnenrad mit der ersten Welle (10) zu- oder abkoppelbar ausgebildet sind, und
wobei die dritte Planeteneinheit (43) den Leistungsausgang für den ersten und den zweiten Leistungspfad bereitstellt.

2. Getriebe (5) nach Anspruch 1, **dadurch gekennzeichnet, dass** das Sonnenrad der dritten Planeteneinheit (43) den Leistungsausgang für den ersten Leistungspfad und der Planetenträger der dritten Planeteneinheit (43) den Leistungsausgang für den zweiten Leistungspfad bildet.

3. Getriebe (5) nach Anspruch 1 oder 2, **dadurch gekennzeichnet, dass** die erste und die zweite Planeteneinheiten (41, 42) jeweils über eine Planetenkupplung (44, 45) mit der ersten Welle (10) in Wirkverbindung gebracht werden können.

4. Getriebe (5) nach Anspruch 3, **dadurch gekennzeichnet, dass** die jeweilige Planetenkupplung (44, 45) zwischen den Sonnenrädern der ersten und zweiten Planeteneinheiten (41, 42) und der ersten Welle (10) angeordnet ist.

5. Getriebe (5) nach einem der Ansprüche 1 bis 5, **dadurch gekennzeichnet, dass** die Übertragungseinheiten (51a, 51b, 51c, 52a, 52b, 52c) des ersten und des zweiten Leistungspfades jeweils auf einem ersten und einem zweiten Außenwellenabschnitt (53, 54) angeordnet sind, die die erste Welle (10) koaxial umgeben und nicht unmittelbar miteinander in Verbindung stehen.

6. Getriebe (5) nach einem der Ansprüche 1 bis 6, **dadurch gekennzeichnet, dass** die Planetenkupplungen (44, 45) als Lamellenkupplung mit jeweils einem Lamelleninnenträger und einem Lamellenaußenträger ausgebildet sind, wobei die Lamelleninnenträger mit den Sonnenrädern der ersten und zweiten Planeteneinheit (41, 42) und in einem zugekoppelten Zustand die Lamellenaußenträger mit der ersten Welle (10) verbunden sind.

7. Getriebe (5) nach einem der Ansprüche 1 bis 7, **dadurch gekennzeichnet, dass** die Übertragungseinheiten (51a, 51b, 51c, 52a, 52b, 52c) zumindest teilweise als Zahnradpaare und/oder als Direktkupplung ausgebildet sind.

8. Getriebe (5) nach einem der Ansprüche 1 bis 8, **dadurch gekennzeichnet, dass** zumindest zwei Übertragungseinheiten (51a, 51b, 51c, 52a, 52b, 52c) in jedem Leistungspfad angeordnet sind.

9. Getriebe (5) nach einem der Ansprüche 1 bis 9, **dadurch gekennzeichnet, dass** eine koppelbare Reversiereinheit (61) vorgesehen ist, die in einem zugekoppelten Zustand eine Umkehr der Drehrichtung einer Ausgangswelle bewirkt.

10. Getriebe nach Anspruch 10, **dadurch gekennzeichnet, dass** die zweite Welle (20) die Ausgangswelle ist.

11. Getriebe nach einem der Ansprüche 1 bis 11, **dadurch gekennzeichnet, dass** einzelne Gänge der zumindest einen Schaltgruppe (50) als Windungsgänge ausgebildet sind, wobei Abtriebseinheiten jeweils einer Übertragungseinheit (51a, 51b, 51c) im ersten Leistungspfad und einer Übertragungseinheit (52a, 52b, 52c) im zweiten Leistungspfad auf einem gemeinsamen Außenwellenabschnitt angeordnet sind, der die zweite Welle (20) koaxial umschließt.

12. Verwendung eines Getriebes (5) nach einem der Ansprüche 1 bis 12 in einer Landmaschine (1), insbesondere einem Traktor.

13. Verfahren zum Betrieb eines Getriebes (5) nach einem der Ansprüche 1 bis 13, wobei die Schaltzustände der zumindest einen Schaltgruppe (50) derart durchlaufen werden, dass für einen erste Gruppe von Schaltzuständen nur eine Übertragungseinheit (51a, 51b, 51c, 52a, 52b, 52c) des ersten oder des zweiten Leistungspfades und für einen zweite Gruppe von Schaltzuständen jeweils eine Übertragungseinheit (51a, 51b, 51c, 52a, 52b, 52c) sowohl im ersten als auch zumindest im zweiten Leistungspfad zugekoppelt sind.

14. Verfahren nach Anspruch 14, **dadurch gekennzeichnet, dass** bei einer gemeinsamen Schaltung des ersten und des zweiten Leistungspfades nur eine der Planetenkupplungen (44, 45) zugekoppelt ist.

15. Verfahren nach Anspruch 14, **dadurch gekennzeichnet, dass** bei einer Schaltung von nur einem der beiden Leistungspfade beide Planetenkupplungen (44, 45) zugekoppelt sind.

## Claims

1. Transmission (5) having at least one first and one second shaft (10, 20), wherein at least one shift group (50) is arranged between the first and the second shaft (10, 20), wherein the at least one shift group (50) has at least two individually shiftable transmission units (51a, 51b, 51c, 52a, 52b, 52c) which differ from one another relative to the gear ratio thereof, and wherein a planetary stage (40) is arranged between the at least one shift group (50) and the first shaft (10), wherein the planetary stage (40) is configured such that a mechanical power introduced via the first shaft (10) is transmittable to the second shaft (20) via a first and/or a second power path which may be coupled-in or coupled-out, wherein at least one transmission unit (51a, 51b, 51c, 52a, 52b, 52c) of the at least one shift group (50) is assigned to each power path, and wherein in at least one shifting state of the at least one shift group (50) the flow of power runs via at least one respective transmission unit (51a, 51b, 51c, 52a, 52b, 52c) of the first and second power path which may be coupled-in or coupled-out, **characterized in that** the planetary stage (40) has at least three planetary units (41, 42, 43), wherein each planetary unit (41, 42, 43) consists of at least one sun gear and respectively one planet carrier circulating around the sun gear, wherein the planetary units (41, 42, 43) are exclusively connected together via the planet carriers, and wherein a first and a second planetary unit (41, 42) are configured to be able to be coupled-in or coupled-out via the respective sun gear relative to the first shaft (10), and wherein the third planetary unit (43) provides the power output for the first and the second power path.

2. Transmission (5) according to Claim 1, **characterized in that** the sun gear of the third planetary unit (43) forms the power output for the first power path and the planet carrier of the third planetary unit (43) forms the power output for the second power path.

3. Transmission (5) according to Claim 1 or 2, **characterized in that** the first and the second planetary units (41, 42) in each case may be brought into operative connection with the first shaft (10) via a planetary gear coupling (44, 45) .

4. Transmission (5) according to Claim 3, **characterized in that** the respective planetary gear coupling (44, 45) is arranged between the sun gears of the first and second planetary units (41, 42) and the first shaft (10).

5. Transmission (5) according to one of Claims 1 to 5, **characterized in that** the transmission units (51a, 51b, 51c, 52a, 52b, 52c) of the first and the second power path are respectively arranged on a first and a second outer shaft portion (53, 54) which coaxially surround the first shaft (10) and are not directly connected together.

6. Transmission (5) according to one of Claims 1 to 6, **characterized in that** the planetary gear couplings (44, 45) are configured as a multiplate clutch, respectively with an inner plate carrier and an outer plate carrier, wherein the inner plate carriers are connected to the sun gears of the first and second planetary unit (41, 42) and in a coupled-in state the outer plate carriers are connected to the first shaft (10).

7. Transmission (5) according to one of Claims 1 to 7, **characterized in that** the transmission units (51a, 51b, 51c, 52a, 52b, 52c) are at least partially configured as gearwheel pairs and/or as a direct coupling.

8. Transmission (5) according to one of Claims 1 to 8, **characterized in that** at least two transmission units (51a, 51b, 51c, 52a, 52b, 52c) are arranged in each power path.

9. Transmission (5) according to one of Claims 1 to 9, **characterized in that** a couplable reversing unit (61), which in a coupled-in state effects a reversal of the rotational direction of an output shaft, is provided.

10. Transmission according to Claim 10, **characterized in that** the second shaft (20) is the output shaft.

11. Transmission according to one of Claims 1 to 11, **characterized in that** individual gears of the at least one shift group (50) are configured as winding gears, wherein driven units respectively of a transmission unit (51a, 51b, 51c) in the first power path and a transmission unit (52a, 52b, 52c) in the second power path are arranged on a common outer shaft portion which coaxially encloses the second shaft (20).

12. Use of a transmission (5) according to one of Claims 1 to 12, in an agricultural machine (1), in particular a tractor.

13. Method for operating a transmission (5) according to one of Claims 1 to 13, wherein the shifting states of the at least one shift group (50) are passed through, such that for a first group of shifting states only one transmission unit (51a, 51b, 51c, 52a, 52b, 52c) of the first or the second power path is coupled-in and for a second group of shifting states respectively a transmission unit (51a, 51b, 51c, 52a, 52b, 52c) in the first and at least in the second power path are coupled-in.

14. Method according to Claim 14, **characterized in that**, when the first and the second power path are connected together, only one of the planetary gear couplings (44, 45) is coupled-in.

15. Method according to Claim 14, **characterized in that**, when only one of the two power paths is connected, both planetary gear couplings (44, 45) are coupled-in.

## Revendications

1. Transmission (5) comportant au moins un premier et un deuxième arbre (10, 30),
au moins un groupe de commutation (50) étant disposé entre le premier et le deuxième arbre (10, 20),
l'au moins un groupe de commutation (50) présentant au moins deux unités de transfert (51a, 51b, 51c, 52a, 52b, 52c) pouvant être commutées individuellement, lesquelles sont différentes les unes des autres en ce qui concerne leur rapport de démultiplication, et
un étage planétaire (40) étant disposé entre l'au moins un groupe de commutation (50) et le premier arbre (10), l'étage planétaire (40) étant réalisé de telle sorte qu'une puissance mécanique introduite par le biais du premier arbre (10) peut être transférée au deuxième arbre (20) par le biais d'un premier et/ou d'un deuxième trajet de puissance pouvant être accouplé ou désaccouplé,
au moins une unité de transfert (51a, 51b, 51c, 52a, 52b, 52c) de l'au moins un groupe de commutation (50) étant associée à chaque trajet de puissance, et
dans au moins un état de commutation de l'au moins un groupe de commutation (50), le flux de puissance s'étendant sur au moins respectivement une unité de transfert (51a, 51b, 51c, 52a, 52b, 52c) du premier et du deuxième trajet de puissance pouvant être accouplé ou désaccouplé,
**caractérisée en ce que** l'étage planétaire (40) possède au moins trois unités planétaires (41, 42, 43),
chaque unité planétaire (41, 42, 43) étant constituée d'au moins une roue planétaire et de respectivement un porte-satellites tournant autour de la roue planétaire,
les unités planétaires (41, 42, 43) étant reliées les unes aux autres exclusivement par le biais du porte-satellites, et
une première et une deuxième unité planétaire (41, 42) étant réalisées de manière à pouvoir être accouplées au premier arbre (10) et désaccouplées de celui-ci par le biais de la roue planétaire respective, et
la troisième unité planétaire (43) fournissant la sortie de puissance pour le premier et le deuxième trajet de puissance.

2. Transmission (5) selon la revendication 1, **caractérisée en ce que** la roue planétaire de la troisième unité planétaire (43) forme la sortie de puissance pour le premier trajet de puissance et le porte-satellites de la troisième unité planétaire (43) forme la sortie de puissance pour le deuxième trajet de puissance.

3. Transmission (5) selon la revendication 1 ou 2, **caractérisée en ce que** la première et la deuxième unité planétaire (41, 42) peuvent être amenées en liaison fonctionnelle avec le premier arbre (10) respectivement par le biais d'un embrayage planétaire (44, 45).

4. Transmission (5) selon la revendication 3, **caractérisée en ce que** l'embrayage planétaire (44, 45) respectif est disposé entre les roues planétaires des première et deuxième unités planétaires (41, 42) et le premier arbre (10).

5. Transmission (5) selon l'une des revendications 1 à 5, **caractérisée en ce que** les unités de transfert (51a, 51b, 51c, 52a, 52b, 52c) du premier et du deuxième trajet de puissance sont disposées respectivement sur une première et une deuxième partie d'arbre extérieur (53, 54) qui entourent coaxialement le premier arbre (10) et ne sont pas directement en liaison l'une avec l'autre.

6. Transmission (5) selon l'une des revendications 1 à 6, **caractérisée en ce que** les embrayages planétaires (44, 45) sont réalisés sous forme d'embrayage à disques comprenant respectivement un support intérieur de disques et un support extérieur de disques, les supports intérieurs de disques étant reliés aux roues planétaires de la première et de la deuxième unité planétaire (41, 42) et, dans un état accouplé, les supports extérieurs de disques étant reliés au premier arbre (10).

7. Transmission (5) selon l'une des revendications 1 à 7, **caractérisée en ce que** les unités de transfert (51a, 51b, 51c, 52a, 52b, 52c) sont réalisées au moins partiellement sous forme de paires de roue dentées et/ou sous forme d'embrayage direct.

8. Transmission (5) selon l'une des revendications 1 à 8, **caractérisée en ce qu'**au moins deux unités de transfert (51a, 51b, 51c, 52a, 52b, 52c) sont disposées dans chaque trajet de puissance.

9. Transmission (5) selon l'une des revendications 1 à 9, **caractérisée en ce qu'**une unité d'inversion (61) pouvant être accouplée est prévue, laquelle provoque une inversion du sens de rotation d'un arbre de sortie dans un état accouplé.

10. Transmission selon la revendication 10, **caractérisée en ce que** le deuxième arbre (20) est l'arbre de sortie.

11. Transmission selon l'une des revendications 1 à 11, **caractérisée en ce que** des rapports individuels de l'au moins un groupe de commutation (50) sont réalisés sous forme de rapports à enroulement, des unités de sortie respectivement d'une unité de transfert (51a, 51b, 51c) dans le premier trajet de puissance et d'une unité de transfert (52a, 52b, 52c) dans le deuxième trajet de puissance étant disposées sur une partie d'arbre extérieur commune qui entoure coaxialement le deuxième arbre (20).

12. Utilisation d'une transmission (5) selon l'une des revendications 1 à 12 dans une machine agricole (1), en particulier un tracteur.

13. Procédé de fonctionnement d'une transmission (5) selon l'une des revendications 1 à 13, selon lequel on passe par les états de commutation de l'au moins un groupe de commutation (50) de telle sorte que, pour un premier groupe d'états de commutation, seulement une unité de transfert (51a, 51b, 51c, 52a, 52b, 52c) du premier ou du deuxième trajet de puissance et, pour un deuxième groupe d'états de commutation, respectivement une unité de transfert (51a, 51b, 51c, 52a, 52b, 52c) sont accouplées à la fois dans le premier et au moins dans le deuxième trajet de puissance.

14. Procédé selon la revendication 14, **caractérisé en ce que**, lors d'une commutation commune du premier et du deuxième trajet de puissance, seulement l'un des embrayages planétaires (44, 45) est accouplé.

15. Procédé selon la revendication 14, **caractérisé en ce que**, lors d'une commutation de seulement l'un des deux trajets de puissance, les deux embrayages planétaires (44, 45) sont accouplés.
